# EUROPEAN PATENT SPECIFICATION

(11) **EP 4 424 589 B1**
(45) Date of publication and mention of the grant of the patent: **06.05.2026**
(21) Application number: 23159218.9
(22) Date of filing: 28.02.2023
(51) Int. Cl.: B64C 1/14

(54) **AIRCRAFT DRAIN MAST**
FLUGZEUGABFLUSSMAST
MÂT DE DRAINAGE D'AÉRONEF

(43) Date of publication of application: 04.09.2024
(73) Proprietor: Airbus Operations GmbH, 21129 Hamburg (DE); Airbus Defence and Space GmbH, 82024 Taufkirchen (DE)
(72) Inventor: Schreck, Tobias, 21129 Hamburg (DE); Napp, Christian, 82024 Taufkirchen (DE)
(74) Representative: LKGLOBAL Partnerschaftsgesellschaft mbB

(56) References cited:
- EP-A1- 3 216 692
- EP-A2- 0 940 338
- DE-A1- 102010 010 167
- DE-C1- 4 408 493
- FR-A1- 3 101 855

## Description

### TECHNICAL FIELD

The present disclosure relates to aircraft drain masts, in particular to an improved aircraft drain mast.

### BACKGROUND

A drain mast is a type of aircraft system component fitting. Figure 1 shows an aircraft (100) with a plurality of aircraft drain masts (101) according to the prior art that are attached in various positions to the lower fuselage (103) and engine nacelle (105) of an aircraft (100). Figure 2 shows a combined side projection view and section view of an example prior art drain mast (101) which includes a section view of the attachment to the aircraft fuselage (or nacelle) skin (107). Figure 3 shows a top view of the attachment surface (207) of the drain mast (101) in proximity or contact with the skin (107).

The primary purpose of aircraft drain masts including the prior art drain mast (101) is to provide a necessary point of egress from the aircraft (100) for unnecessary fluid originating from one or more aircraft systems, or as a necessary point of ingress of air via a set of one or more vent lines or conduits (219) for one or more aircraft systems. The unnecessary fluid may originate from one or any number of fluid emitting systems, such as condensers, lubrication systems, expansion reservoirs, etc., within the aircraft (100).

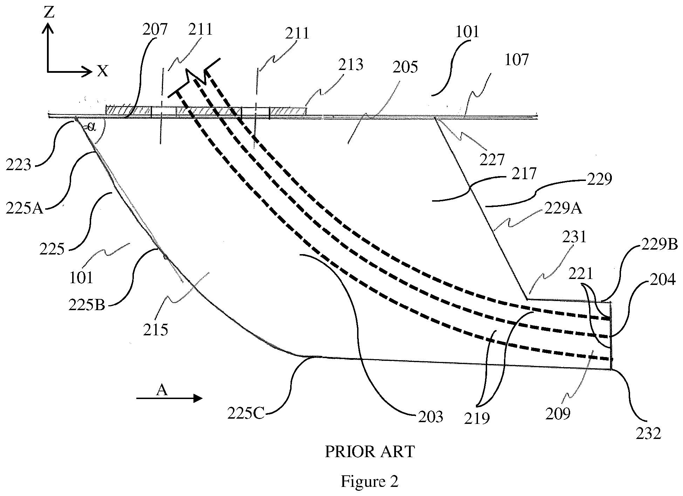

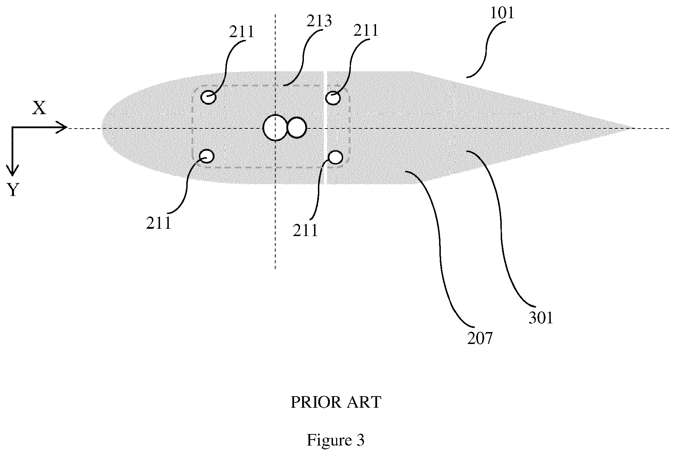

In figures 2 and 3, the prior art drain mast (101) projects radially outwards at an angle away from the horizontal XY plane of the aircraft (100) and extends outwards towards a narrower tip end (209) that tapers aft in the X direction to become orientated in the freestream direction (A). It should be noted that typically the freestream direction A is approximately co-linear with the airplane x axis when the aircraft is in steady and level flight. In a typical coordinate convention appreciated by the skilled person, the X, Y and Z axes correspond to a set of orthogonal aircraft axes, whereby X is the longitudinal aircraft axis, Y corresponds to the lateral aircraft axis oriented in a spanwise direction of the wing of the aircraft, and the direction Z corresponds to the vertical axis, these three directions being orthogonal to each other, and create a set of three orthogonal planes with respect to each other.

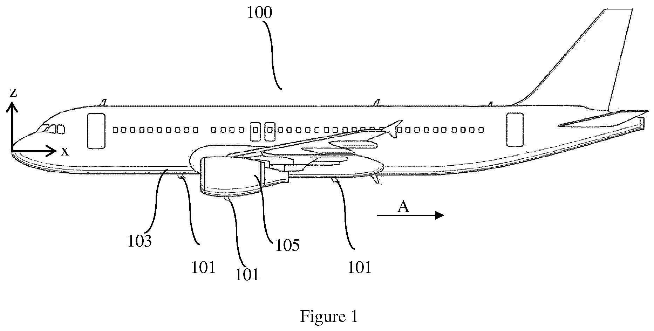

An aircraft drain mast (101) typically comprises an oblong and symmetrically shaped main body (203) that projects outward from the aircraft skin (107), as mentioned, when it is installed to the aircraft (100). The tip portion (209) of the drain mast (101) comprises a planar aft facing surface (204) with one or more aft-facing apertures (221) (i.e. facing in the A direction as shown in figure 1) that are the termination point of the corresponding vent lines or conduits (219) that are enclosed by the main body (203) of the drain mast (101). The apertures (221) serve as the point of fluid egress or ingress from the drain mast (101). The placement and orientation of the apertures (221) at the tip (209) is an important design requirement for drain masts (101) because the apertures (221) need to be positioned at a distance from the skin surface (107) of the aircraft (100) where the airstream is steady and not turbulent. Placing the apertures (221) too close the aircraft skin (107) in areas where turbulent flow is expected (for example in the boundary layer which surrounds the aircraft (100) in flight) is problematic for fluid egress because turbulent airflow closer to the aircraft skin (107) increases the likelihood of egressed fluid to dispersed towards the aircraft and to contact the outer skin surface (107) in proximity to and /or downstream of the aircraft drain mast (101) during flight. This creates an aesthetic and operational issue for some aircraft operators. Placement of the apertures (221) in areas of steady flow is also desired in cases where fluid egress or ingress requires a steady rather than unsteady fluid pressure, which is often the case where the drain mast (101) has one or more of the vent lines or conduits (219).

The main body (203) of the drain mast (100) typically attaches at a root end portion (205) (base portion or "foot") to the aircraft skin (107) at an attachment surface (207) that has an attachment surface area or "footprint" (301) (seen as the shaded area of the horizontal XY plane of figure 3. The example prior art drain mast (101) of figures 2 and 3 is fastened at a root portion using a plurality of fasteners (211) to the aircraft structure, which comprises of the skin portion (107) and a corresponding system fitting (213) located on the opposite interior side of the skin portion (107) to the drain mast (101). The main body (203) is bounded by a front portion (215), rear portion (217), root portion (205) and tip portion (209). The vent lines and conduits (219) are configured to either route through or fluidly connect to corresponding system conduit fittings (213).

A disadvantage of the prior art drain mast (101) described thus far with the support of figure 2 and 3, is that the aerodynamic shape is not optimized for low drag and rather for manufacturability.

Particularly noteworthy of the design is the use of straightened, linear edge sections (225, 229, 230) and hard junctions (223, 227, 231) in the planform that contribute to increasing the drag created by the drain mast (101) during aircraft operation.

The front portion (215) forms a leading edge (225) whose shape can be described as comprising a near linear straight section (225A) having a near zero curvature value K that extends outwards from the skin (107) at point 223, and that transitions monotonically to a further section (225B) characterized as having an increasing curvature value K relative to the section (225A) until the leading edge (225) reaches the freestream direction (A) whereafter the leading edge (225) transitions to a tip section (225C) having a near zero curvature value K until termination at an outermost aft edge (232) of the tip portion (209). A first hard junction (223) is formed by the leading edge (225) of the front portion (215) where it meets the exterior surface of the skin (107).

Although the skilled person would be aware, it is pointed out that the curvature Kn at a point on a curve is given by the equation *Kn =1* / *rₙ,* where *rₙ* is the radius of curvature at a desired point *n* on the curve. The curvature of an exactly straight line is zero (as *r* is ∞).

The rear portion (217) forms a trailing edge (229) whose shape can be described as comprising a near linear section (229A) having a near zero curvature value K that extends outwards from the skin (107) at point 227 to a point of a further hard junction (231). Thereafter the trailing edge (229) comprises a further near linear section (229B) having a near zero curvature value K that extends from point (231) until termination at a further aft edge (232) of the tip portion (209).

The hard junctions (223, 227, 231) physically formed between adjacent sections of the trailing edge section (229A, 229B), the leading sections (225A) and/or the aircraft skin (107) create instability in the aerodynamic flow as it tries to flow smoothly around the drain mast (101), which leads to flow separation at these points. This turbulence not only affects the performance of the drain mast in the sense of positioning apertures (219) in non-turbulent areas of flow, but it results in higher drag of the drain mast (101), which has a negative impact on the overall aerodynamic performance of the aircraft and/or the aircraft aero-acoustic signature.

Another main disadvantage of the drain mast (101) described thus far relates to their attachment and the size of their attachment footprint (301). In some areas of the aircraft, drain masts are prone to operational damage owing to their proximity to ground servicing equipment or ground staff while the aircraft is on ground. In spite of preventative measures, collisions do sometimes happen resulting in impact forces being imparted on the drain mast (101), usually at the tip end (209) or leading edge (225), and the introduction impact bending loads and deflections that must be reacted at the foot (205) of the drain mast (101) and the surrounding aircraft skin structure (107). This often can result in permanent damage occurring to the aircraft structure (107), which requires structural repair and downtime for the aircraft. This is particularly the case where the aircraft structure is manufactured from composite materials. A specifically problematic area for design optimization of the drain mast (101) is the downstream portion of the root section (205) where the attachment surface (207) meets the underlying aircraft nacelle skin (107). Here, the design must take into account drag and impact induced bending loads being reacted by the skin (107). The reaction of these loads requires the skin (107) to be loaded out of plane (in direction Z for example shown in Figure 2), which is a particular issue for thin section fuselage skins and/or for monolithic composite skins that are common today. Increasing the skin thickness or switching to a more high performance material type in the reaction area are options, however doing so also increases weight, complexity and cost of the skin assembly. It may also require the modification of the corresponding system fitting (213) and fasteners (211). Therefore, it is desirable to optimize the design of the aircraft drain mast (101) such that the thickness of the skin (107) does not need to be increased in order to react the loads without damage or substantial deformation in such impact cases.

Another possibility is to increase the drain mast footprint (301) to be as large as possible so that the impact force and deflection is reacted over as wide an area as possible. While this would lower the chance or permanent damage occurring to the aircraft structure, it is not possible using the current design as a limitation to using a large footprint for the drain mast is weight. Drain masts like all other aircraft components must be designed within a weight target, which if exceeded leads to a suboptimum design and a reduction of useful payload of the aircraft.

EP 0 940 338 A2 shows a breather outlet for the gearbox of a gas turbine engine comprises a mast which extends from the nacelle of the gas turbine engine. The mast contains a breather duct which interconnects the interior of the gearbox with an exhaust outlet. The mast has an aerodynamic main portion and a sub portion extending rearwardly from the main portion. The exhaust outlet is in the sub portion and is arranged to direct oil and air in a downstream direction. The exhaust outlet is spaced from the trailing edge of the main portion, the sub portion has guide vanes in the breather duct to straighten the oil and air flow and vortex generators are provided on the mast to avoid oil staining of the nacelle.

### SUMMARY OF THE INVENTION

An aircraft drain mast is provided that is configured to be attached to an external skin of an aircraft, and comprises an aerodynamically shaped main body that is bounded by a root (or proximal) portion, a front (leading edge or upstream) portion, a rear (trailing edge or downstream) portion and a tip (or distal) portion, wherein the root portion comprises an attachment surface, wherein the main body comprises one or more internal conduits extending between the root portion and one or more corresponding apertures defined by the tip portion, wherein the front portion comprises a leading edge defined by a first curve section extending between a first end point at the root portion and a second end point the tip portion, wherein the rear portion comprises a trailing edge defined by a second curve section extending between a third end point at the root portion and a fourth end point at the tip portion, wherein the first curve section or the second curve section comprise(s) an inflection point adjacent to the root portion, and wherein the second curve section has a curvature value κ that is either constant (i.e. constant radius ) or increasing monotonically from the third end point until a point of maximum curvature is reached at an apex between the root portion and the tip portion, after which the curvature value κ of the second curve section decreases monotonically between the apex and the fourth end point at the tip portion. Although the skilled person would be aware, it is pointed out that the curvature κn at a point on a curve is given by the equation *K n =1* /*r n,* where *r n* is the radius of curvature at a point *n* on the curve. The curvature of an exactly straight line is zero (as *r* is ∞).

From an aerodynamic loading perspective, a drain mast comprising a rear portion with the above mentioned curvature is advantageous, firstly in that it provides a drain mast design with a main body that has a gradual and continuous concave depression that smoothly extends towards the front portion of the drain mast before it smoothly extends aft wards towards the tip portion. This results in a main body with a reduced wetted area compared to state of the art drain masts. A comparably lower skin friction drag component of the overall parasitic drag load is achieved by this design during flight. In addition, the chosen monotonically increasing then decreasing curvature in the design of the main body ensures that an abrupt changes in geometric form such as any hard junction features between the trailing (i.e. aft most) edge of the drain mast and the skin, or along the trailing edge of the drain mast, are avoided. Instead a more gradual and smooth surface transition is provided which ensures that disturbances to the otherwise smooth airflow over the surface of the aircraft is reduced as much as possible. This is important as it is known that any such disturbances can create turbulent flow regimes, and also increase the excrescence drag component of parasitic drag of the aircraft, which can be significant particularly for aircraft operating in subsonic or transonic flight regimes. Therefore, the drag load generated by the drain mast during flight is further reduced compared to the state of the art. Such a lower drag load is advantageous in terms of aircraft performance, and hence is associated with improved fuel burn (which may be relatively more significant for smaller aircraft).

From a structural perspective, there are also additional benefit gained by the claimed shape design features, and that is the design provides a drain mast main body with a concave depression that extends from the aft portion towards the front portion. While this design has a reduced wetted area and therefore also weight compared to the state of the art, the footprint or size of the attachment surface in contact with the skin can remain the same or indeed can be optimized to be even larger than the state of the art designs, due to the avoidance of exceeding normal weight target for the component. This can ensure that commonality with the existing skin design and corresponding system fitting and fastener designs can be maintained, resulting in a design that can be exchanged with existing drain masts of the prior art design. Furthermore, during an impact load case, the larger footprint means a lower stress level to be reacted by the skin adjacent to the rear portion of the drain mast, where the attachment surface area is maintained. This avoids the need for any of the above mentioned material changes or thickening of the skin section in these areas in order to avoid structural issues. It should be noted that such loading may even reduce further if the design of the rear portion incorporates a first end point that starts further aft, which would require a great extent of curvature between the first end point and the apex, which is possible and may indeed improve the flow characteristics even further at the root section of the drain mast.

The leading edge of the front portion may further comprise a curve section having a curvature that decreases monotonically from a first end point to a second end point. This reduces the material volume of the drain mast further, resulting a lower cost and lower weight design. A gradual sweeping of the front leading edge portion also compliments the concave form of the rear portion with a convex form of the front portion upstream of the rear portion, thereby optimising the required wetted area and loading of the drain mast and further enhancing transition of the airflow around the drain mast by smoothly the junctions between the front or rear edge of the drain mast and the skin, thus allowing for an even more gradual surface transition that further lowers the excrescence drag component of parasitic drag of the aircraft.

The first curve section or second curve section further comprise an inflection point adjacent to the root portion to provide a blend edge or fillet edge. A fillet edge in geometric terms is a tangent feature with a constant radius, whereas a blend edge starts out as a tangent (fillet) edge but is replaced by a continuous curvature. Such a feature further avoids hard edge or step features, thereby reducing the aerodynamic impact of the drain mast, particularly at the foremost and rear most portions in the X direction. Such a feature may also allow an increased edge thickness while avoiding a step feature. It should also be noted that the inflection point of the first or second curve may extend around a circumferential edge of the root portion either partially, or fully using a transition so as to form a smooth continuous circumferential blend or edge feature circumferentially around the root portion in proximity to the skin portion. Such a design may be preferred to increase the material thickness and footprint area of the root portion. Doing so is advantageous as it may further also enable the use of countersunk fasteners with heads seated in the root portion of the drain mast, which further improves drag performance of the drain mast.

The aerodynamic main body is swept at an angle α greater than 15 degrees, preferably between 30 degrees and 45 degrees. Such a design reduces the pressure drag component of drag load generated by the drain mast when the aircraft is in flight, thereby further achieving the above mentioned aerodynamic and related structure advantages. Further advantages of the invention will now become apparent from the detailed description with appropriate reference to the accompanying drawings.

### BRIEF DESCRIPTION OF THE DRAWINGS

Embodiments are presented herein are described below with reference to the following drawings, in which:

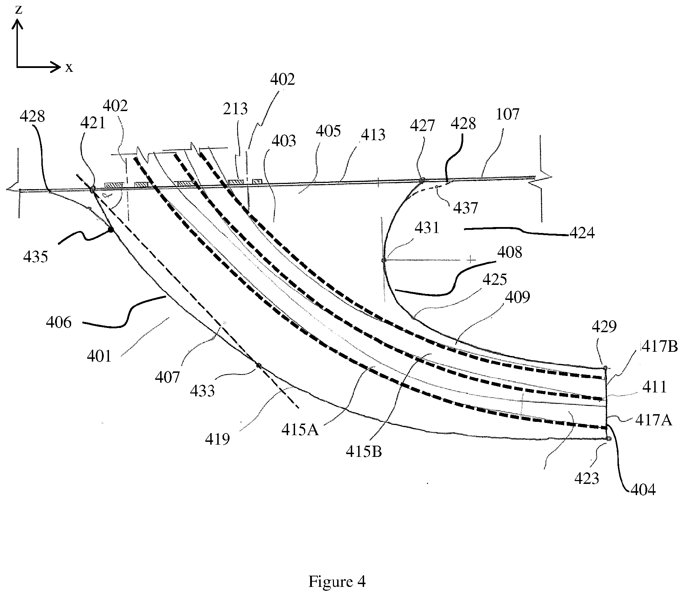

Figure 4 is a combined side section view of a drain mast (401), through plane XZ, and includes a section view of the attachment to the aircraft fuselage skin (107) and component fitting (213).

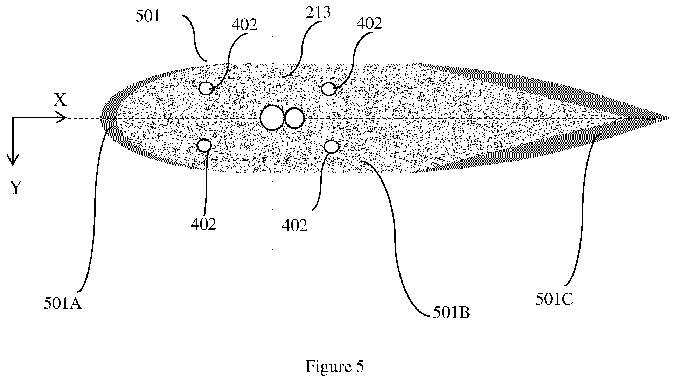

Figure 5 is a top view of the attachment surface area (501) of the drain mast (401) of figure 4 in proximity or contact with the skin (107) otherwise referred to as the attachment "footprint" of the drain mast (501). The outline of the position of the fitting (213) relative to the drain mast 401 is also provided.

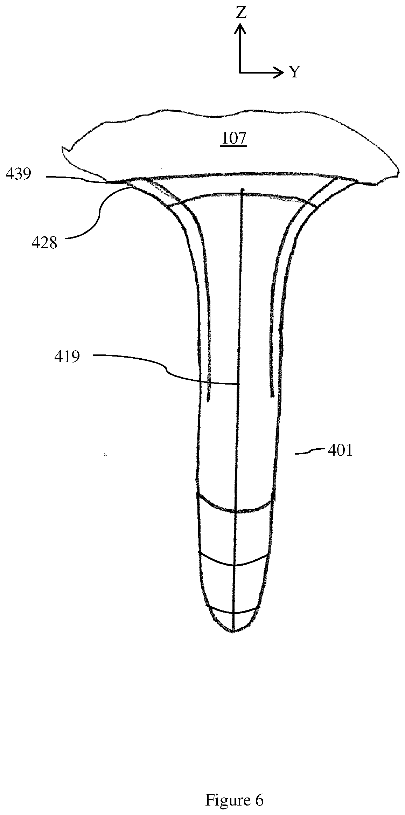

Figure 6 is frontal projection view of the drain mast (401) according to an embodiment of figures 4 and 5.

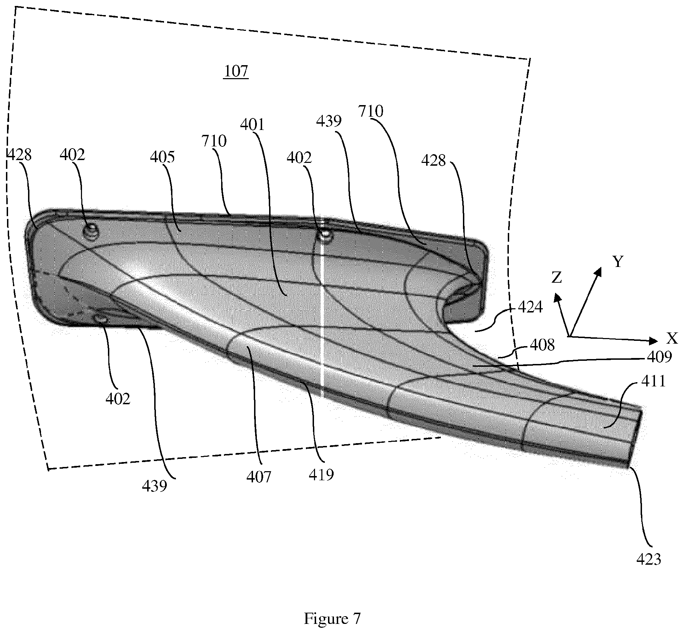

Figure 7 is an isometric view of the drain mast (401) according to an embodiment of figures 4 to 6.

### DETAILED DESCRIPTION

With reference to figures 4 and 5, the drain mast (401) comprises an oblong main body (403) of optimum aerodynamic shape and projects outward from the aircraft surface (107). The main body (403) is swept at an angle α of 35 degrees. This angle is measured in a side projection on the ZX plane of the drain mast (401). It is the included angle between the skin 107, and a line formed by a point (421) and a point (433). Point (421) exists where a first curve section (419) of a leading edge (406) of the front portion (407) geometrically intersects the skin (107). Point (433) exists on the first curve section (419) and is positioned at a distance relative from the root portion (405) measured in the Z direction that is half the radial span of the drain mast (401) in the ZX plane.

The main body (403) is cast from a metal alloy material, but may be made from any other suitable polymer or reinforced polymer material, or indeed made by another process such as milling or additive layer methods. The root portion (405) comprises the attachment surface (413) (better shown in Figure 5). The main body (403) encloses a pair of internal conduits (415A, 415B) extending between the root portion (405) and a pair of corresponding apertures (417A, 417B) located at a planar aft facing surface (404) of the tip portion (411).

The drain mast (401) is configured to be fastened at the root portion (405) using a plurality of fasteners (402) to the aircraft structure, which is the skin portion (107) and a corresponding system fitting (213) located on the opposite interior side of the skin portion (107) to the drain mast (401). As will be noticed, the means of attachment of the drain mast (401) and the specific configuration of the apertures (417A) and (417B) are the same as the prior art drain mast of Figures 2 and 3, however it may indeed be different, something which the skilled person would understand.

The attachment surface (413) has a surface area footprint (501) which is given by the sum of the areas (501A), (501B) and (501C) and which as a sum is greater in size than the prior art, in that, the attachment area (501) is larger overall. The area (501B) is equal in size to the attachment area (301) of the prior art drain mast (101).

The leading edge (406) of the front portion (407) is defined by a first curve section (419) extending between the first end point (421) at the root portion (405) and a second end point (423) at a lower edge of the tip portion (411). The shape of leading edge (406) and hence the front portion (407) of the main body (403) is defined by the first curve section (419) having a curvature value K that decreases monotonically from the first end point (421) to the second end point (423).

The rear portion (409) comprises a gradual and continuous concave depression (424), with a trailing edge (408) that is defined by a second curve section (425) extending between a third end point (427) and a fourth end point (429). The third end point (427) is formed where a construction line of the second curve section (425) would geometrically intersect the skin (107). The fourth end point (429) is located at the upmost (Z +ive direction) point of the tip portion (411).

To achieve a necessary smooth shape of the concave depression, the shape of the trailing edge (408) and hence the rear portion (409) of the main body (403) is defined by the second curve section (425) having a curvature value K that is either constant (meaning constant radius) or is increasing monotonically from the third end point (427) until a point of maximum curvature is reached at an apex(431) between the root portion (405) and the tip portion (411), thereafter the curvature of the second curve section (425) decreases monotonically between the apex (431) and the fourth end point (429) at the tip portion (411).

The first curve section (419) or second curve section (425) comprise an inflection point (435, 437) in close proximity to the root portion (405) at a distance less than or equal to 10% of the span of the drain mast 401, so as to provide an edge fillet (428) (of constant or varying curvature) adjacent to the attachment surface (413). In such a case the curve section for assessing the monotonic curving nature of the first curve section (419) or second curve section (425) is shorter and starts at the inflection point (435, 437), and not the respective first end point (421) or third end point (427).The inflection point (435, 437) of the first or second curve (19, 25) may be confined to the front or rear portions (407,409) of the main body (403) in proximity to the aircraft skin (107).

As can be seen from figure 6 and 7, the fillet (428) may further extend around a circumferential edge (439) of the root portion (405) such that the root portion (405) is blended in shape to the aircraft skin portion (107). The root portion (405) comprises 4 countersunk fastener holes (701) configured to receive attachment fasteners 402 (not shown). An optional sealing packer (710) made from an electrically neutral material may be provided as shown between the attachment surface (413) and skin (107) so as to avoid galvanic corrosion of the drain mast (401), meaning that the drain mast (401) may not be mounted directly to the aircraft skin (107).

Where in the foregoing description, any relative geometrical relationship that is described with reference to any specific figure should be considered on a 2D plane that is coplanar or parallel to the principal aircraft plane (XZ, XY, ZY) referred to in the specific figure being discussed. It is also to be understood that use of the term monotonic in connection with describing a function of curvature, means that the first derivative of the curvature function does not change sign (i.e. going from positive to negative or vice versa).

Reference should be made to the claims for determining the true scope of the present invention. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

While at least one exemplary embodiment is disclosed herein, it should be understood that modifications, substitutions and alternatives may be apparent to one of ordinary skill in the art and can be made without departing from the scope of the appended claims. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

## Claims

1. An aircraft drain mast (401) configured to be attached to a skin portion (107) of an aircraft (100) comprising:
a main body (403) bounded by a root portion (405), a front portion (407),
a rear portion (409), and a tip portion (411),
wherein the main body (403) comprises one or more internal conduits (415A, 415B) extending between the root portion (405) and one or more corresponding apertures (417A, 417B) located at the tip portion (411),
wherein a leading edge (406) of the front portion (407) is defined by a first curve section (419) extending between a first end point (421) at the root portion (405) and a second end point (423) the tip portion (411),
wherein a trailing edge (408) of the rear portion (409) is defined by a second curve section (425) extending between a third end point (427) at the root portion (405) and a fourth end point (429) at the tip portion (411),
wherein the first curve section (419) or the second curve section (425) comprises an inflection point (435, 437) adjacent to the root portion (405),
and wherein the second curve section (425) has a curvature that is constant or increasing monotonically from the third end point (427) until a point of maximum curvature is reached at an apex (431) between the root portion (405) and the tip portion (411), after which the curvature of the second curve section (425) decreases monotonically between the apex (431) and the fourth end point (429) at the tip portion (411), wherein the curve section for assessing the monotonic curving nature of the first curve section (419) or second curve section (425) starts at the inflection point (435, 437).

2. The aircraft drain mast (401) according to claim 1, wherein a leading edge of the front portion (407) is defined by a first curve section (419) having a curvature that decreases monotonically from the first end point (421) to the second end point (423).

3. The aircraft drain mast (401) of any preceding claim, comprising a blend or fillet edge (428) adjacent to the root portion (405).

4. The aircraft drain mast (401) of claim 3, wherein the blend or fillet edge (428) extends around a circumferential edge (439) of the root portion (405).

5. The aircraft drain mast (401) of any preceding claim wherein the aerodynamic main body (403) is swept at an angle α greater than 15 degrees, preferably between 30 degrees and 45 degrees, wherein the angle is the included angle between the skin portion (107) and a line formed by a point (421) and a point (433) as measured in a side projection on the ZX plane of the drain mast (401).

6. An aircraft engine nacelle (105) or fuselage structure (103) comprising an aircraft drain mast (101, 401) according to any preceding claim.

7. An aircraft (100) comprising an aircraft drain mast (101, 401) according to any preceding claims 1 to 5.

## Patentansprüche

1. Flugzeugablassmast (401), der konfiguriert ist, um an einem Hautabschnitt (107) eines Flugzeugs (100) befestigt zu werden, umfassend:
einen Hauptkörper (403), der durch einen Wurzelabschnitt (405), einen vorderen Abschnitt (407),
einen hinteren Abschnitt (409) und einen Spitzenabschnitt (411) begrenzt ist,
wobei der Hauptkörper (403) eine oder mehrere interne Leitungen (415A, 415B) umfasst, die sich zwischen dem Wurzelabschnitt (405) und einer oder mehreren entsprechenden Öffnungen (417A, 417B), die sich an dem Spitzenabschnitt (411) befinden, erstrecken,
wobei eine Vorderkante (406) des vorderen Abschnitts (407) durch einen ersten gekrümmten Abschnitt (419) definiert ist, der sich zwischen einem ersten Endpunkt (421) an dem Wurzelabschnitt (405) und einem zweiten Endpunkt (423) an dem Spitzenabschnitt (411) erstreckt,
wobei eine Hinterkante (408) des hinteren Abschnitts (409) durch einen zweiten gekrümmten Abschnitt (425) definiert ist, der sich zwischen einem dritten Endpunkt (427) an dem Wurzelabschnitt (405) und einem vierten Endpunkt (429) an dem Spitzenabschnitt (411) erstreckt,
wobei der erste gekrümmte Abschnitt (419) oder der zweite gekrümmte Abschnitt (425) einen Wendepunkt (435, 437) benachbart zu dem Wurzelabschnitt (405) umfasst,
und wobei der zweite gekrümmte Abschnitt (425) eine Krümmung aufweist, die konstant ist oder monoton von dem dritten Endpunkt (427) zunimmt, bis ein Punkt maximaler Krümmung an einem Scheitelpunkt (431) zwischen dem Wurzelabschnitt (405) und dem Spitzenabschnitt (411) erreicht ist, wonach die Krümmung des zweiten gekrümmten Abschnitts (425) monoton zwischen dem Scheitelpunkt (431) und dem vierten Endpunkt (429) an dem Spitzenabschnitt (411) abnimmt, wobei der gekrümmte Abschnitt zur Beurteilung des monotonen Krümmungsverhaltens des ersten gekrümmten Abschnitts (419) oder des zweiten gekrümmten Abschnitts (425) am Wendepunkt (435, 437) beginnt.

2. Flugzeugablassmast (401) nach Anspruch 1, wobei eine Vorderkante des vorderen Abschnitts (407) durch einen ersten gekrümmten Abschnitt (419) definiert ist, der eine Krümmung aufweist, die monoton von dem ersten Endpunkt (421) zu dem zweiten Endpunkt (423) abnimmt.

3. Flugzeugablassmast (401) nach einem der vorhergehenden Ansprüche, umfassend eine Blend- oder Ausrundungskante (428) benachbart zu dem Wurzelabschnitt (405).

4. Flugzeugablassmast (401) nach Anspruch 3, wobei sich die Blend- oder Ausrundungskante (428) um eine Umfangskante (439) des Wurzelabschnitts (405) erstreckt.

5. Flugzeugablassmast (401) nach einem der vorhergehenden Ansprüche, wobei der aerodynamische Hauptkörper (403) in einem Winkel α von mehr als 15 Grad, vorzugsweise zwischen 30 Grad und 45 Grad, geneigt ist, wobei der Winkel der eingeschlossene Winkel zwischen dem Hautabschnitt (107) und einer Linie ist, die durch einen Punkt (421) und einen Punkt (433), gemessen in einer Seitenprojektion auf die ZX-Ebene des Ablassmasts (401), gebildet wird.

6. Flugzeugtriebwerksgondel (105) oder Rumpfstruktur (103), umfassend einen Flugzeugablassmast (101, 401) nach einem der vorhergehenden Ansprüche.

7. Flugzeug (100), umfassend einen Flugzeugablassmast (101, 401) nach einem der vorhergehenden Ansprüche 1 bis 5.

## Revendications

1. Mât de drainage d'aéronef (401) configuré pour être fixé à une partie de revêtement (107) d'un aéronef (100) comprenant :
un corps principal (403) délimité par une partie d'emplanture (405), une partie avant (407),
une partie arrière (409), et une partie de pointe (411),
dans lequel le corps principal (403) comprend un ou plusieurs conduits internes (415A, 415B) s'étendant entre la partie d'emplanture (405) et une ou plusieurs ouvertures correspondantes (417A, 417B) situées au niveau de la partie de pointe (411),
dans lequel un bord d'attaque (406) de la partie avant (407) est défini par une première section incurvée (419) s'étendant entre un premier point d'extrémité (421) au niveau de la partie d'emplanture (405) et un deuxième point d'extrémité (423) de la partie de pointe (411),
dans lequel un bord de fuite (408) de la partie arrière (409) est défini par une deuxième section incurvée (425) s'étendant entre un troisième point d'extrémité (427) au niveau de la partie d'emplanture (405) et un quatrième point d'extrémité (429) au niveau de la partie de pointe (411),
dans lequel la première section incurvée (419) ou la deuxième section incurvée (425) comprend un point d'inflexion (435, 437) adjacent à la partie d'emplanture (405),
et dans lequel la deuxième section incurvée (425) a une courbure qui est constante ou augmente de manière monotone à partir du troisième point d'extrémité (427) jusqu'à ce qu'un point de courbure maximale soit atteint au niveau d'un sommet (431) entre la partie d'emplanture (405) et la partie de pointe (411), après quoi la courbure de la deuxième section incurvée (425) diminue de manière monotone entre le sommet (431) et le quatrième point d'extrémité (429) au niveau de la partie de pointe (411), dans lequel la section de courbe permettant d'évaluer le caractère courbe monotone de la première section de courbe (419) ou de la deuxième section de courbe (425) commence au point d'inflexion (435, 437).

2. Mât de drainage d'aéronef (401) selon la revendication 1, dans lequel un bord d'attaque de la partie avant (407) est défini par une première section incurvée (419) ayant une courbure qui diminue de manière monotone à partir du premier point d'extrémité (421) jusqu'au deuxième point d'extrémité (423).

3. Mât de drainage d'aéronef (401) selon une quelconque revendication précédente, comprenant un bord de mélange ou de congé (428) adjacent à la partie d'emplanture (405).

4. Mât de drainage d'aéronef (401) selon la revendication 3, dans lequel le bord de mélange ou de congé (428) s'étend autour d'un bord circonférentiel (439) de la partie d'emplanture (405).

5. Mât de drainage d'aéronef (401) selon une quelconque revendication précédente, dans lequel le corps principal aérodynamique (403) est balayé selon un angle α supérieur à 15 degrés, de préférence entre 30 degrés et 45 degrés, dans lequel l'angle est l'angle inclus entre la partie de revêtement (107) et une ligne formée par un point (421) et un point (433) tel que mesuré dans une projection latérale sur le plan ZX du mât de drainage (401).

6. Nacelle de moteur d'aéronef (105) ou structure de fuselage (103) comprenant un mât de drainage d'aéronef (101, 401) selon une quelconque revendication précédente.

7. Aéronef (100) comprenant un mât de drainage d'aéronef (101, 401) selon l'une quelconque des revendications précédentes 1 à 5.
